# EUROPEAN PATENT SPECIFICATION

(11) **EP 3 729 005 B1**
(45) Date of publication and mention of the grant of the patent: **26.05.2021**
(21) Application number: 18836911.0
(22) Date of filing: 24.12.2018
(51) Int. Cl.: G01F 1/24, G01F 23/74

(54) **DETECTOR DEVICE FOR DETECTING LIQUID SUCKED FROM A CONTAINER**
DETEKTIONSGERÄT ZUM DETEKTIEREN VON FLÜSSIGKEIT WELCHE AUS EINEM BEHÄLTER GESAUGT WIRD
DISPOSITIF DE DÉTECTION DE LIQUIDE SUCÉ À PARTIR D'UN RÉCIPIENT

(30) Priority: 22.12.2017 IT 201700149413
(43) Date of publication of application: 28.10.2020
(73) Proprietor: SEKO S.p.A., 02010 Cittaducale (RI) (IT)
(72) Inventor: CREATI, Cristian, 02010 Cittaducale (RI) (IT); DAMIANI, Andrea, 02010 Cittaducale (RI) (IT); ESPOSITO, Luigino, 02010 Cittaducale (RI) (IT); PANTALEONI, Adrio, 02010 Cittaducale (RI) (IT)
(74) Representative: IP Sextant s.r.l.
(86) International application number: PCT/IB2018/060576
(87) International publication number: WO 2019/123437

(56) References cited:
- WO-A1-2013/127468
- DE-A1- 2 849 974
- DE-U1- 29 823 702
- GB-A- 2 349 199
- US-A- 3 876 009
- US-A- 3 894 433
- US-A1- 2005 248 465
- US-B1- 6 914 531

## Description

The present invention concerns a detector device configured to be connected to a container containing a liquid and to an external suction device so as to allow the suction device to suck the liquid that is inside the container, wherein the detector device is configured to detect the presence of liquid in the container; the liquid may be a chemical product, the external suction device may be a suction pump, in particular an external dosing pump, or a venturi dosing (or mixer) device, and the container may be of any type, for instance, a bag or a tank. The detector device according to the invention allows in a simple, reliable, efficient and inexpensive way, to monitor presence of liquid and to signal when the liquid is absent (or at least to signal absence of a liquid amount in the container sufficient to allow an external pump to suck the liquid itself), even permitting to stop suction, the detector device easily adapting to different types of containers and to different applications.

In the following of the present description, reference will be mainly made to applications of the detector device according to the invention to the field of industrial or domestic, washing apparatuses, in particular for clothing and/or linen (e.g. industrial or domestic washing machines), as well as for tableware and/or cookware (e.g. industrial or domestic dishwashers). However, it should be noted that the detector device according to the invention may be applied in any other technological context where presence of liquid inside a container must be monitored and possible absence of liquid in the container (or at least absence of a liquid amount in the container sufficient to allow an external pump to suck the liquid itself) must be signalled, such as for instance in the field of water treatment, still remaining within the scope of protection of the present invention defined by the attached claims.

Also, in the following of the present description, reference will be mainly made to applications of the detector device according to the invention wherein the detector device is connected to an external suction pump. However, it should be noted that the detector device according to the invention may be connected to a different external suction device, such as for instance a venturi dosing (or mixer) device (similar to the one disclosed in Fig. 10 of document WO 2013/011484 A1), still remaining within the scope of protection of the present invention defined by the attached claims.

It is known that in the field of the washing apparatuses it is often necessary that a dosing pump sucks a liquid chemical product from a container, such as a bag or a tank, in order to mix it with water according to a precise dosage. In this kind of applications, when the liquid chemical product inside the container is over, or when the amount remaining in the container does not allow the external dosing pump to such any more the chemical product itself, it may be proper to stop suction, to signal absence of liquid in the container and to replace the empty container with a full container.

As a consequence, such kind of applications needs to monitor the presence of the liquid chemical inside the container and to signal its absence.

In the prior art, in the case of tanks or other containers with rigid structure, suction nozzles are used which are specifically adapted to the container to which they are to be applied. Such suction nozzles sometimes comprise a rigid conduit made of plastic material, the lower end of which is provided with a bottom filter and a level probe, and the upper end of which, provided with a cap configured to screw in the opening of the tank, is configured to be connected to a suction pump or to a different suction device, such as a dosing (or mixer) device; in other prior art solutions, the level probe is arranged at the end of a flexible tube and is completely immersed in the liquid to be dosed. The level probe output, which is normally an open/closed switch, is used to stop suction when the liquid level inside the container is below a minimum threshold. An example of such suction nozzle is disclosed in document WO 2009/105318 A1.

Other prior art systems may be used, most of all in the case where the liquid chemical product is contained in containers having a non-rigid structure, such as for instance bags, or in case of containers in which use of a suction nozzle is not is not possible. Such other prior art systems usually measure electrical properties, such as for instance electrical conductivity or capacity, inside the container (or suction tube connecting the latter to the external suction pump) which are indicative of the presence of the chemical product, such as the systems disclosed in documents EP 1 380 843 A2, US 2015/0268230 A1 and US 2016/0069716 A1. Such systems, which often use one or more pairs of sensing electrodes immersed in the liquid chemical product contained in the container, require a proper electronic processing and control unit which, by monitoring the measured electrical properties, detects possible absence of the liquid chemical product inside the container (or suction tube).

Document US 6 914 531 B1 discloses a detector device for flow detection using a series of ducts in the form of a vane-type flow sensor apparatus with a bypass mechanism.

Other devices for detecting liquid absence which are applicable to the bags detect the depression that is created inside the bag when the chemical product is over and suction by the suction device continues, causing the bag itself to collapse on itself.

Prior art apparatuses and systems suffer from some drawbacks.

First of all, prior art suction nozzles are not applicable to containers having a non-rigid structure, such as for instance bags. Also, prior art suction nozzles are not applicable to any container having a rigid structure, since the size of the rigid plastic duct must be suitably adapted to the size of the specific container to ensure that the level probe provides significant detections of the level of liquid chemical product present inside the container.

Moreover, prior art systems that measure electrical properties inside the container may need metal electrodes (e.g. necessary for electrical conductivity detection) which are in contact with the liquid chemical product; in case of aggressive chemical products, this requirement limits the life of the electrodes and, thus, increases frequency of interventions for maintenance and/or replacement of the electrodes and, in case of problems of chemical compatibility, restricts the range of use of such systems.

Furthermore, all prior art systems that measure the electrical properties inside the container require electronic units intended for electrical properties detection and for processing data and detection signals to obtain values indicative of presence/absence of chemical product, which electronic units entail a corresponding increase in costs. Also, such electronic units often require a proper power supply that the related prior art system must provide directly or through a dedicated power supply.

Moreover, prior art systems that measure electrical properties inside the container require sophisticated and consequently expensive components and, in any case, are not applicable to any liquid chemical product, because the chemical properties which are measured by such systems may be not significantly sensed for a class of chemical products.

By way of example, and not by way of limitation, in case of systems measuring the electrical conductivity between one or more pairs of electrodes, in the case where the electrical conductivity of a chemical product is below a predetermined threshold (currently equal to about 10 microsiemens/cm), it is necessary to have extremely specialized electronic units and electrodes made of specific materials which entail a considerable increase in the cost of this solution. In any case, for chemical products having an electrical conductivity lower than a minimum threshold (currently equal to 0,054 microsiemens/cm for the most advanced probes, i.e. four-electrode graphite probes), the systems that measure the electrical conductivity are not capable to discriminate whether there is presence of liquid chemical inside the container or not. This is the case of non-ionic liquid chemical products, since the charge carriers between the two electrodes are the ions present in the liquid chemical product the electrical conductivity of which is measured, so that these systems are completely ineffective.

Even systems based on the determination of the depression that is created inside the bags when the liquid runs out suffer from problems of chemical compatibility, since all the sensors used for this purpose have a membrane inside them that may be attacked by the vapours generated by the liquid (especially if it is a chlorine-based liquid) which can cause the membrane to pierce and the detection device to stop functioning properly.

It is an object of this invention, therefore, to allow in a simple, reliable, efficient and inexpensive way, to monitor presence of liquid, in particular a liquid chemical product, inside any container, for instance a bag or a tank, from which the liquid may be sucked by an external pump, in particular an external dosing pump, and to signal when the liquid is absent (or at least to signal absence of a liquid amount in the container sufficient to allow an external pump to suck the liquid itself); obviously, the container is configured to be connected (directly or through a suction tube) to an external suction device so as to allow the pump to suck the liquid that is inside the container.

It is specific subject-matter of the present invention a detector device configured to detect presence of liquid in a container, comprising a main duct provided at a first end with an inlet, configured to be connected to the container, and at a second end with an outlet, configured to be connected to a suction device, wherein an inner channel of the main duct is in communication with a detection chamber through a branch channel and a return channel arranged along a lateral surface of the main duct extending between the first and the second end, wherein the branch channel is arranged between the first end of the main duct and the return channel and wherein the return channel is arranged between the second end of the main duct and the branch channel, the detection chamber being closed by a top cap and by a bottom wall and comprising a stem that is coupled to at least one between the top cap and the bottom wall and that internally houses a reed switch, wherein the stem is inserted into a longitudinal cavity of a float housing at least one permanent magnet in an inner seat, the float being configured to slide along the stem between a rest position and a floating position, wherein:
- one between the rest position and the floating position coincides with a position of interaction of the float with the reed switch, at which said at least one permanent magnet magnetically interacts with the reed switch, whereby the reed switch is closed; and
- the other one between the rest position and the floating position coincides with a position of non-interaction of the float with the reed switch, at which said at least one permanent magnet does not magnetically interact with the reed switch, whereby the reed switch is open.

According to another aspect of the invention, an area of a section of the return channel may be less than an area of a section of the branch channel, optionally, the area of said section of the return channel may range from 20% to 60%, more optionally from 25% to 50%, still more optionally from 30% to 40%, even more optionally equal to about 35% of the area of said section of the branch channel.

According to further aspect of the invention, said inner channel of the main duct may comprise an end portion, extending from the first end to the branch channel, that has an inner volume at least equal to 50%, optionally at least equal to 75%, of an inner volume of the detection chamber extending from the bottom wall to the return channel.

According to an additional aspect of the invention, the rest position may coincide with the position of interaction of the float with the reed switch and the floating position may coincide with the position of non-interaction of the float with the reed switch.

According to another aspect of the invention, the stem may be coupled only to the top cap, whereby the stem protrudes from the top cap, wherein wires connected to terminals of two magnetically actuated ferromagnetic reeds of the reed switch are housed within a cable exiting from the cap.

According to further aspect of the invention, a free end of the stem, that is facing the bottom wall, may be provided with a rest position stop bolt configured to prevent the float from sliding beyond said free end.

According to an additional aspect of the invention, the top cap may be removably coupled to the detection chamber and the bottom wall may be integrally coupled to the detection chamber.

According to another aspect of the invention, the top cap may be provided with a threaded rim screwed internally to an end of the detection chamber, a first OR-ring seal ensuring sealing between the detection chamber and the top cap.

According to further aspect of the invention, the main duct may be provided with a branch mouth and a return mouth respectively coupled to a branch duct and a return duct with which the detection chamber is provided, wherein the branch channel is formed by the branch mouth and the branch duct, and wherein the return channel is formed by the return mouth and the return duct.

According to an additional aspect of the invention, the branch duct may be inserted into the branch mouth with a sealing coupling, optionally a plug-in coupling, and the return duct may be inserted into the return mouth with a sealing coupling, optionally a plug-in coupling.

According to another aspect of the invention, the inlet may be provided with a threaded rim screwed internally to the first end of the main duct, a second O-ring seal ensuring sealing between the main duct and the inlet, whereby the inlet is removably coupled to the first end of the main duct, and the outlet may be provided with a threaded rim screwed internally to the second end of the main duct, a third O-ring seal ensuring sealing between the main duct and the outlet, whereby the outlet is removably coupled to the second end of the main duct, the inlet may be provided with an inlet duct through which it is configured to be connected to the container, and the outlet may be provided with an outlet duct through which it is configured to be connected to the suction device.

According to further aspect of the invention, the stem may have a cylindrical or prism shape.

According to an additional aspect of the invention, the longitudinal cavity of the float may have a shape corresponding to the one of the stem.

The detector device according to the invention is configured to be connected (directly or through a first intermediate duct) to a container (having either a rigid structure, such as a tank, or a non-rigid one, such as a bag) containing a liquid (e.g. a liquid chemical product) and to an external suction device (e.g., an external dosing pump) (directly or through a second intermediate duct) so as to allow the suction device to suck the liquid that is inside the container, whereby the liquid (e.g. the liquid chemical product) passes through the detector device. The detector device according to the invention is configured to detect presence of liquid in the container by detecting a liquid sucked from the container and, consequently, to detect the absence of liquid (e.g. liquid chemical product) and to signal such possible absence to the suction system of which the suction device is part (e.g., a dosing system), by closing an electrical contact. Thanks to this signalling, the suction system (e.g. the dosing system) is optionally capable to stop suction (and, in case of a dosing pump, even the dosage) and to signal the exhaustion of the liquid (e.g. the liquid chemical product), so that an operator proceeds to replace the empty container with a full container.

The advantages offered by the detector device according to the invention are evident, since it solves all the aforementioned problems of the prior art systems and apparatus.

First of all, the detector device according to the invention is not based on the measurement of electrical properties, such as electrical conductivity, and is based on an electrical contact operated by at least one permanent magnet that does not need any particular electronic component, or particular power supply requirements, wherein neither the contact nor said at least one permanent magnet are in direct contact with the liquid (e.g. a liquid chemical product). Since no electrical and/or electronic component nor membrane is in direct contact with the liquid, the detector device according to the invention does not suffer from any of the chemical compatibility problems suffered by the prior art systems and apparatuses. This allows the detector device according to the invention to operate with a very wide set of liquid chemical products, also ensuring a lower need for maintenance, since it has no components, such as electrodes, to be replaced and/or maintained.

Also, since it is not based on a measure of electrical properties, the detector device according to the invention is capable to operate even with liquids, in particular chemical products, having values of specific chemical properties which are low or zero.

In particular, since it is not based on the electrical conductivity measurement, the detector device according to the invention solves problems of inefficacy of prior art systems when operating in the presence of liquids, such as liquid chemical product, which are non-ionic or have electrical conductivity of less than 0,054 microsiemens/cm.

Furthermore, the detector device according to the invention is simpler to manufacture and, consequently, entails much reduced costs with respect to prior art systems.

Moreover, the detector device according to the invention can be used in many different applications. In particular, it can also replace the prior art suction nozzles, by simply inserting a (suction) duct between the opening of the container containing the liquid (e.g. a liquid chemical product) and the inside of the container containing the liquid, wherein the duct is provided at the end arranged inside the container with a bottom filter; alternatively, the same detector device according to the invention can be provided with a bottom filter, in correspondence of the end configured to be connected (directly or through an intermediate duct) to the opening of the container. The detector device according to the invention is advantageously provided with an electrical contact fully compatible with that of conventional suction nozzles and, hence, it is possible to use the detector device according to the invention in place of conventional nozzles, in a manner completely transparent to the electronic suction control system arranged downstream of the same detector device, i.e. without the need for any electrical, electronic, or firmware modification. This permits to standardise the type of device used to signal the exhaustion of liquid, e.g. liquid chemical product, gaining advantages in manufacturing and storage, thanks to the fact that it is sufficient to substantially have a single detector device for all types of liquid chemical product (independently, for instance, from the ionic or non-ionic nature of the liquid, its viscosity, its chemical aggressiveness, as in case of acid products) and of product container (e.g., tanks or bags of various sizes). In particular, unlike conventional suction nozzles, for which it is necessary to make nozzles of different size on the basis of the tank size, it is sufficient to simply insert an end portion of the detector device (or of the first intermediate duct connecting the latter to the tank) having an appropriate length in the tank to achieve a control adequate to the various configurations of the tanks (tanks of any size and depth).

Furthermore, the invention solves the problem of conventional suction nozzles the rigid duct of which may not be inserted into any container. In fact, the detector device according to the invention may be reliably applied to any container, even a container having a non-rigid structure, such as a bag, to effectively detect presence/absence of liquid in the container itself.

In particular, the detector device according to the invention may also be applied to a tank containing chemical product and provided with a special cap, also called Closed Loop, such as for instance the one disclosed in document US 6142345 A, that may not be removed and is intended for preventing spillage of the chemical product on the ground in the case where the tank is inadvertently overturned. A similar case occurs when the tank and the relative dosing device are provided with a so-called mechanical coupling device preventing the use of chemical products other than those recommended with that dosing device. In this case, it is not possible to use a conventional suction nozzle, while the detector device according to the invention may be applied to such tank.

The present invention will be now described, by way of illustration and not by way of limitation, according to its preferred embodiments, by particularly referring to the Figures of the annexed drawings, in which:
Figure 1 shows a perspective view (Fig. 1a) and a front view (Fig. 1b) of a first embodiment of the detector device according to the invention;
Figure 2 shows a longitudinal section view of the detector device of Figure 1;
Figure 3 shows an exploded perspective view of the detector device of Figure 1;
Figure 4 shows two longitudinal partial section views of the detector device of Figure 1, in one of which the float is in a rest position (Fig. 4a), while in the other one the float is in a floating position;
Figure 5 shows a longitudinal section view of the portion of the detector device of Figure 1 containing the detection chamber wherein the float is in the rest position (Fig. 5a) and in the detecting position (Fig. 5b); and
Figure 6 shows a longitudinal section view of the portion of a second embodiment of the detector device according to the invention containing the detection chamber wherein the float is in the rest position (Fig. 6a) and in the detecting position (Fig. 6b).

In the Figures identical reference numerals will be used for alike elements.

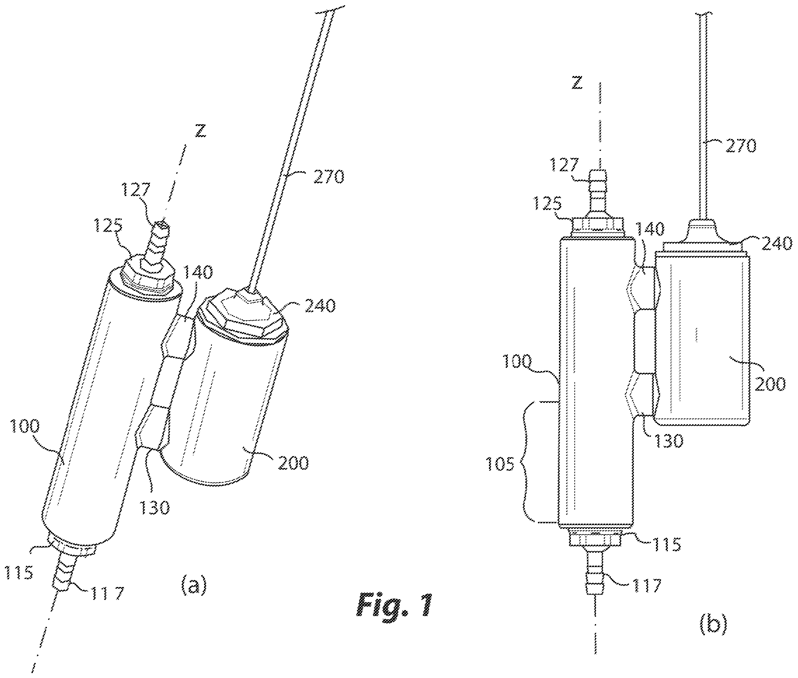

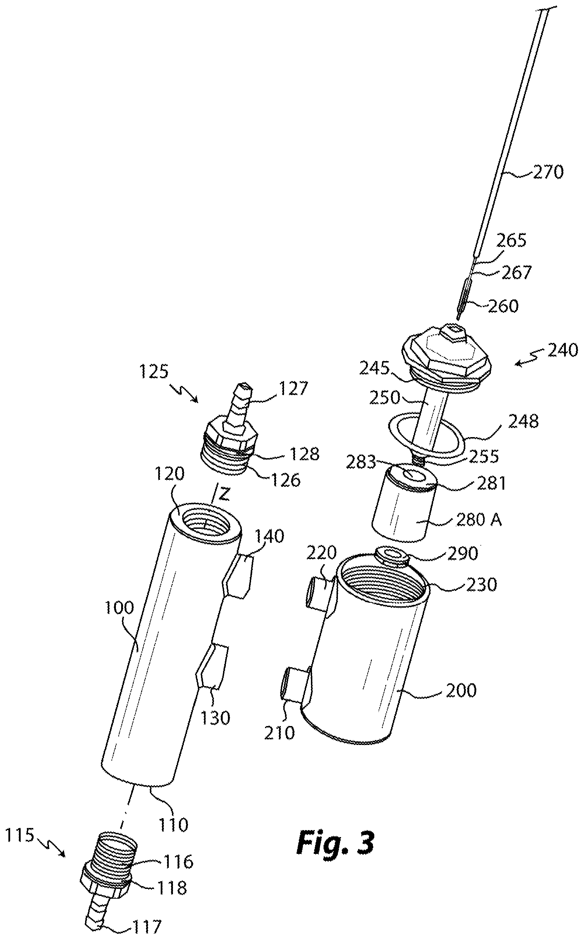

With reference to Figures 1-4, it may be observed that a first embodiment of the detector device according to the invention comprises a main duct 100, with substantially cylindrical shape, having a longitudinal axis z, that is provided at a first end 110 with a removable inlet 115 configured to be connected to a container and at a second end 120 with a removable outlet 125 configured to be connected to a suction pump (or to a different suction device, such as for instance an external venturi dosing - or mixer - device). The inlet 115 is provided with a threaded rim 116 that screws internally to the first end 110 (that has a corresponding threaded portion) and with an inlet duct 117 (configured to be connected to a container directly or through a first intermediate duct), while a conventional OR-ring seal 118 ensures sealing between the main duct 100 and the inlet 115; similarly, the outlet 125 is provided with a threaded rim 126 that screws internally to the second end 120 (that has a corresponding threaded portion) and with an outlet duct 127 (configured to be connected to a suction pump directly or through a second intermediate duct), while a conventional OR-ring seal 128 ensures sealing between the main duct 100 and the outlet 125.

The detector device according to the invention has an operating configuration wherein the second end 120 and the outlet 125 are at an height above the ground (namely, above the ground on which the container to which the detector device is applied rests) higher than the height above the ground at which the first end 110 and the inlet 115 are, wherein optionally the longitudinal axis z of the main duct 100 extends along a vertical orientation; in the Figures, the detector device according to the invention is shown in its operating configuration. In particular, when the detector device according to the invention assumes the operating configuration, a liquid contained in the main duct 100 that is subject to gravity alone exits from the inlet 115 (and not from the outlet 125, from which differently air enter the main duct 100).

The main duct 100 is also provided with a branch mouth 130 and a return mouth 140, arranged along the lateral surface of the main duct 100; the branch mouth 130 is arranged between the first end 110 (or the inlet 115) and the return mouth 140, while the return mouth 140 is arranged between the branch mouth 130 and the second end 120 (or the outlet 125).

The detector device according to the invention further comprises a detection chamber 200, with substantially cylindrical shape, having a longitudinal axis (not shown in the Figures) parallel to the longitudinal axis z of the main duct 100. The detection chamber 200 has a branch duct 210 and a return duct 220, arranged on the lateral surface of the same detection chamber 200, which are, optionally removably, connected to the branch mouth 130 and return mouth 140, respectively. When connected to each other, the branch duct 210 and the branch mouth 130 form a branch channel, while the return duct 220 and the return mouth 140 form a return channel which put the inner channel of the main duct 100 in communication with the inside of the detection chamber 200. In particular, in the first embodiment shown in Figures 1-5, the branch duct 210 is inserted into the branch mouth 130 with a sealing coupling (e.g. through conventional seals), optionally a plug-in coupling, and the return duct 220 is inserted into the return mouth 140 with a sealing coupling (e.g. through conventional seals), optionally a plug-in coupling. Optionally, the area of the section of the return channel (i.e., the area of the section orthogonal to the return channel axis and internal to the walls delimiting the return channel) is lower than the area of the section of the branch channel (i.e., the area of the section orthogonal to the branch channel axis and internal to the walls delimiting the branch channel); more optionally, the area of the section of the return channel ranges from 20% to 60%, still more optionally from 25% to 50%, even more optionally from 30% to 40%, even still more optionally equal to about 35% of the area of the section of the branch channel.

When the detector device assumes the operating configuration, the return duct 220 and the return mouth 140 are at a height above the ground (namely above the ground on which the container to which the detector device is applied rests) higher than the height above the ground at which the branch duct 210 and the branch mouth 130 are.

The detection chamber 200 is provided at its return end 230 with a removable top cap 240 having a stem 250, that is substantially cylindrical (even if the shape of the stem is not an essential feature for the invention, and it could also be a prism with any polygonal bases, e.g. squares, rectangles, parallelograms, rhombuses, pentagons, hexagons and the like), that protrudes from the top cap 240 and that internally houses a reed switch 260, the wires 265 of which (connected to the terminals 267 of the two magnetically actuated ferromagnetic reeds) are housed in a cable 270 exiting from the removable top cap 240; in particular, the housing of the reed switch 260 inside the stem 250 is sealed, whereby liquid possibly present in the detection chamber 200 may not enter the housing and come into contact with the reed switch 260. By way of example and not by way of limitation, the top cap 240 is provided with a threaded rim 245 that screws internally to the end 230 (that has a corresponding threaded portion), and a conventional OR-ring seal 248 may be used to ensure sealing between the detection chamber 200 and the top cap 240. A branch end, opposite to the return end 230, is closed by a bottom wall 235, opposite to the top cap 240, integrally coupled to the lateral (substantially cylindrical) wall of the detection chamber 200.

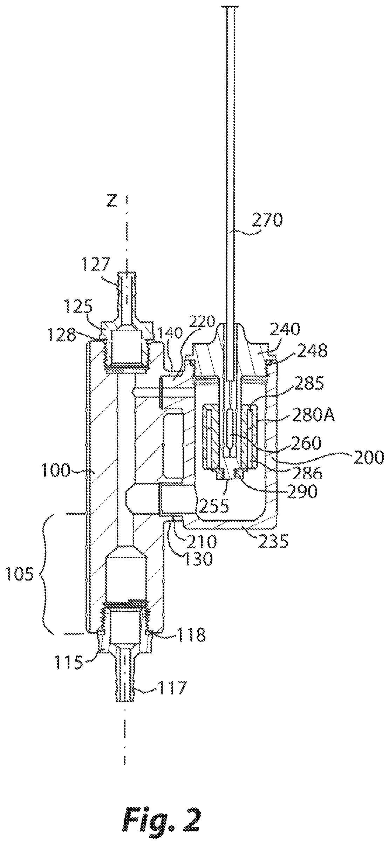

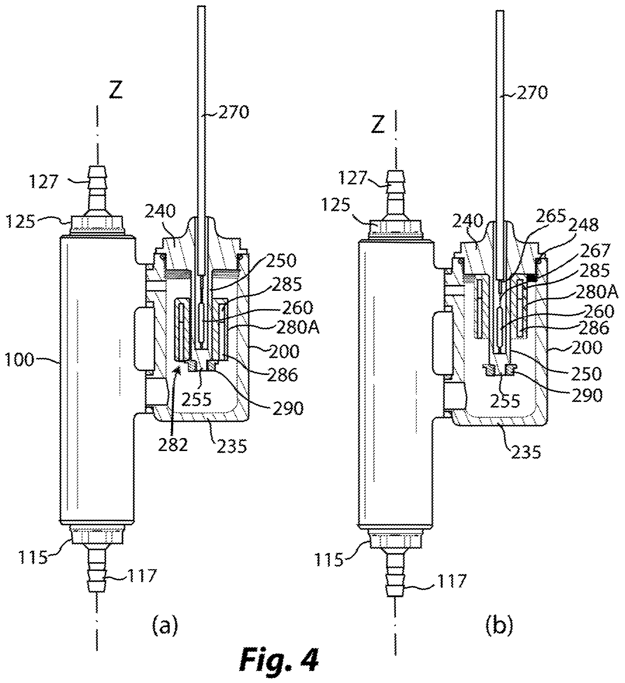

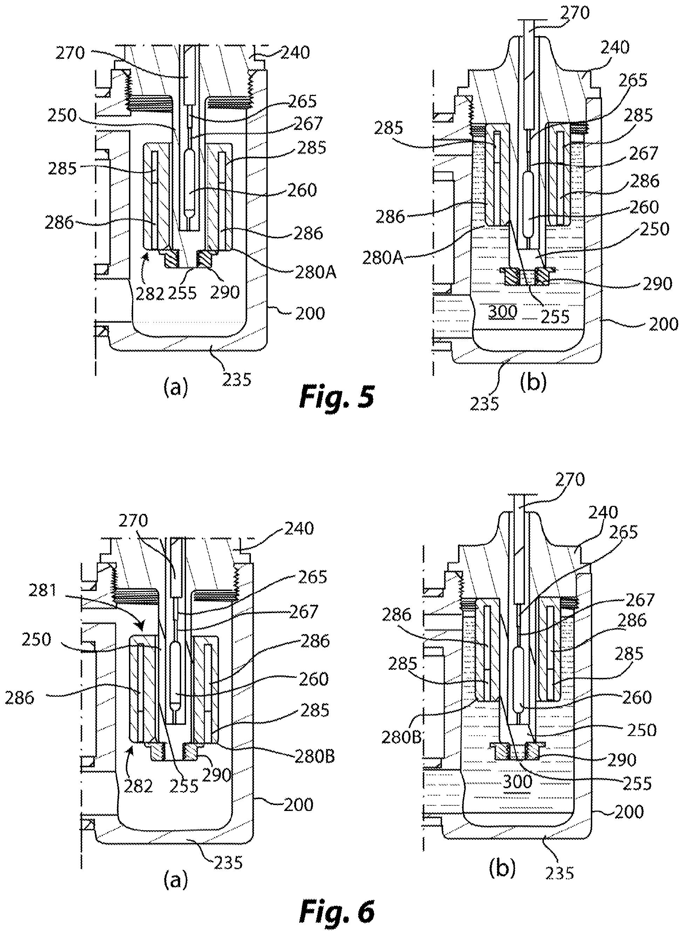

The stem 250 is inserted into the longitudinal cavity 283 of a float 280A, having substantially shape of a hollow cylinder and advantageously made of plastic material (or in any case of a material compatible with the liquid flowing through the main duct 100 and entering the detection chamber 200, in the manner that will be described later). The float 280A houses in an inner seat (at least) one permanent magnet 285 (shown in Figures 2, 4 and 5) and is configured to slide along the stem 250 between a rest position shown in Figure 4a (as well as in Figures 2 and 5a), at which said (at least) one permanent magnet 285 magnetically interacts with and consequently closes the reed switch 260, and a floating position shown in Figure 4b (as well as in Figure 5b), at which said (at least) one permanent magnet 285 does not magnetically interact with the reed switch 260 that remains open. Advantageously, the longitudinal cavity 283 has shape corresponding to the one of the stem, whereby (in the embodiment of the detector device of Figures 1-5) it is substantially cylindrical (even if the shape of the longitudinal cavity, as for the stem, is not an essential feature for the invention, and it could also be a prism with any polygonal bases, e.g. squares, rectangles, parallelograms, rhombuses, pentagons, hexagons and the like). The free end of the stem 250 (that is facing the bottom wall 235) is provided with a threaded portion 255 that is configured to removably screws into a rest position stop bolt 290 that, consequently, couples to the free end of the stem 250 and prevents the float 280A from sliding below such free end and disengaging from the stem 250.

As stated above, the float 280A houses in an inner seat (at least) one permanent magnet 285 configured to magnetically interact with the reed switch 260 (namely, with the ferromagnetic reeds thereof) housed in the stem 250, as it will be described in greater detail later. The inner seat housing the permanent magnet 285 is sealed, whereby liquid possibly present in the detection chamber 200 may not enter in the inner seat and come into contact with the permanent magnet 285. In the first embodiment of the detector device according to the invention, the permanent magnet 285 is in a position of the inner seat closer to a first end 281 of the float 280A (which first end 281 is facing the inner wall of the top cap 240) than the other end 282 of the float 280A (which other end 282 is facing the bottom wall 235), whereby the permanent magnet 285 is positioned in proximity of the first end 281 of the float 280A, and it is optionally stably kept in such position by (at least) one cylindrical insert 286 housed in the inner seat of the float 280A as well.

It should be noted that other embodiments of the detector device according to the invention may have different couplings among the several elements, still remaining within the scope of protection of the present invention defined by the attached claims.

For instance, other embodiments of the detector device according to the invention may have the inlet 115 and/or the outlet 125 which have an internal thread into which a threaded rim of the first end 110 and/or the second end 120, respectively, of the main duct 100 screws; alternatively the inlet 115 and the first end 110 of the main duct 100 and/or the outlet 125 and the second end 120 of the main duct 100 may be configured to be coupled to each other through a plug-in coupling.

Further embodiments of the detector device according to the invention may have the inlet 115 and/or the outlet 125 that, instead of being removable, are integrally coupled to the first end 110 and/or the second end 120, respectively, of the main duct 100.

Also, other embodiments of the detector device according to the invention may have the branch mouth 130 that is inserted into the branch duct 210 with a sealing coupling (e.g. through conventional seals), and possibly even the return mouth 140 may be inserted into the return duct 220 with a sealing coupling (e.g. through conventional seals).

Moreover, further embodiments of the detector device according to the invention may have the top cap 240 that has an internal thread into which a threaded rim of the end 230 of the detection chamber 200 screws, or the top cap 240 and the end 230 of the detection chamber 200 are configured to be coupled to each other through a plug-in coupling.

Furthermore, other embodiments of the detector device according to the invention may have the top cap 240 that, instead of being removable, is integrally coupled to the detection chamber 200 and/or the bottom wall 235 that, instead of being integrally coupled, is removably coupled to the (lateral wall of the) detection chamber 200 with a sealing coupling (e.g., thanks to a conventional OR-ring seal).

Also, further embodiments of the detector device according to the invention may have the stem 250 that is removably coupled to the top cap 240 (e.g. through a threaded or plug-in coupling) and/or the rest position stop bolt 290 and the free end of the stem 250 are configured to be coupled to each other through a plug-in coupling or the rest position stop bolt 290 is integrally coupled to the free end of the stem 250.

Moreover, other embodiments of the detector device according to the invention may be devoid of the rest position stop bolt; in this case, the free end of the stem 250 is spaced apart from the bottom wall 235 of the detection chamber 200 by a distance shorter than the longitudinal extension of the float 280A, optionally by a distance not longer than 75%, more optionally not longer than 50%, still more optionally not longer than 25% of the longitudinal extension of the float 280A.

Furthermore, other embodiments of the detector device according to the invention may have the stem 250 that is provided with a floating position stop bolt or other floating position stop element arranged in proximity of the end of the stem 250 coupled to the top cap 240, that prevents the float 280A from sliding over such end and coming into contact with the inner wall of the top cap 240. In this case, the stem 250 may be provided with the rest position stop bolt or not.

Furthermore, other embodiments of the detector device according to the invention may have the stem 250 that, instead of being coupled to the top cap 240, is coupled to the bottom wall 235 and protrudes from the bottom wall 235 (and still internally houses a reed switch 260, the wires 265 of which are housed in a cable 270 exiting from the bottom wall 235); in this case, the free end of the stem 250 (that is facing the inner wall of the top cap 240) may be provided with a, optionally removable, stop bolt that prevents the float 280A from sliding over such free end and disengaging from the stem 250 (however, it should be noted that even in this arrangement with stem 250 protruding from the bottom wall 235 the stop bolt is not an essential feature for the invention). Alternatively, the stem 250 may be coupled to both the top cap 240 and the bottom wall 235; in this case, the stem 250 may be integrally coupled to both (advantageously, the detection chamber and the float will be made in two - or even more - pieces which are for instance fused to each other during the manufacturing process), or the stem 250 may be integrally coupled to only one between the top cap 240 and the bottom wall 235 while it is removably coupled to the other one between the top cap 240 and the bottom wall 235, or the stem 250 may be removably coupled to both the top cap 240 and the bottom wall 235. Even in the just described arrangements, the stem 250 may be provided with a rest position stop bolt (preventing the float 280A from sliding below a rest position) and/or with a floating position stop bolt (preventing the float 280A from sliding over a floating position).

Consequently, in general, the stem 250 is coupled to at least one between the top cap 240 and the bottom wall 235 and its wires 265 are housed in a cable 270 exiting from one between the removable top cap 240 and the bottom wall 235 to which the stem 250 is coupled; the latter is optionally provided with a rest position stop bolt and/or with a floating position stop bolt.

Moreover, other embodiments of the detector device according to the invention may have said (at least) one permanent magnet 285 housed in the inner seat of the float 280A in a position different from the one shown in Figures 2, 4 and 5, for instance in a central position, provided that said (at least) one permanent magnet is configured to magnetically interact with the reed switch 260 (namely, with the ferromagnetic reeds thereof) housed in the stem 250, as it will be described in greater detail later. By way of example, the shape and size of the float 280A and/or the shape and size of the inner seat in which said (at least) one permanent magnet is housed and/or the position of said (at least) one permanent magnet in the inner seat of the float and/or the shape and size of the stem 250 housing the reed switch 260 and/or the position of the reed switch 260 in the stem 250 are adapted to allow said (at least) one permanent magnet to magnetically interact with the reed switch 260, as it will be describer in greater detail later.

In order to better understand the detector device according to the invention, the operating modes of the first embodiment shown in Figures 1-5 are described in the following, similar modes being valid also for the other embodiments.

The detector device according to the invention is inserted between a container (having either a rigid structure, as a tank, or a non-rigid one, as a bag) containing a liquid (e.g. a liquid chemical product) and an external suction pump (e.g., a dosing pump). In particular, the detector device must assume the operating configuration, the inlet 115 is connected (directly or through a first intermediate duct) to the container and the outlet 125 is connected to the external suction pump, whereby the detector device allows the pump to suck the liquid that is inside the container and the liquid sucked by the pump flows through the same detector device.

The detector device according to the invention is based on the interaction of the magnetic field generated by the permanent magnet 285 housed in the inner seat of the float 280A and the reed switch 260 housed in the stem 250.

As shown in Figures 2, 4a and 5a, when no liquid is present in the detection chamber 200, the float 280A is configured to fall onto the rest position stop bolt 290 due to the force of gravity and thus to stably stay in the rest position even if the suction pump connected downstream of the outlet 125 is operated to suck. Consequently, the permanent magnet 285 is in the rest position at which it magnetically interacts with (i.e. excites) the reed switch 260 and causes the same reed switch 260 to close. Therefore, the permanent magnet 285 assumes the rest position when either the external pump is off or the external pump does not suck any liquid, for instance because the container has not a liquid amount sufficient to allow the external pump to suck the same liquid (in particular, as it occurs when the container is empty).

Differently, as shown in Figure 5b, when the external suction pump succeeds in sucking liquid from the container, the liquid flows through the main duct 100 and simultaneously (at least partially) fills the detection chamber 200 (through the branch channel formed by the branch mouth 130 and the branch duct 210), whereby the float 280A floats in the liquid 300 present in the detection chamber 200 and, consequently, slides from the rest position up to reaching and stably maintaining the floating position at which the permanent magnet 285 does not magnetically interact any more with (i.e. de-excites) the reed switch 260 (since the permanent magnet 285 is far away from the reed switch 260), that thus opens (i.e. interrupts the contact between its own ferromagnetic reeds); optionally, in the floating position the float 280A comes into contact with the inner wall of the removable top cap 240. In particular, the liquid in the detection chamber 200 is preferably sucked by the branch channel (formed by the branch mouth 130 and the branch duct 210) rather than from the return channel (formed by the return mouth 140 and the return duct 220), especially when the area of the section of the return channel is lower than the area of the section of the branch channel.

If during suction the container gets empty (i.e. the liquid is absent or in any case the liquid amount is insufficient to allow the external pump to suck the same liquid), the detection chamber 200 gets empty as well and the float 280 descends from the floating position down to the rest position detecting the absence of the liquid thanks to the closing of the reed switch 260, short-circuiting the wires 265 (connected to the terminals 267 of the two magnetically actuated ferromagnetic reeds) and thus signalling the absence of liquid in the container.

Differently, when suction is stopped and liquid is still present in the container (that hence is not empty), in the first embodiment of the detector device according to the invention shown in Figures 1-5 (and also in other embodiments), generally liquid remains in the detection chamber 200 and the float 280 remains in the floating position. In other words, in the first embodiment of the detector device (and also in other embodiments), the detection chamber 200 gets empty only when the container is empty and the external suction pump (or another suction device) is sucking. In fact, when liquid flows through the main duct 100, liquid fills the detection chamber 200 as well by means of suction and on the basis of the principle of communicating vessels; instead, when there is no liquid flow through the main duct 100, i.e. when suction from the outlet 125 is stopped, but the container is not empty, liquid that has previously filled the detection chamber 200 stagnates in the latter.

Differently, in different embodiments of the detector device according to the invention, in absence of suction, liquid could flow back towards the container and the detection chamber 200 could get empty even when suction is stopped, whereby in this case the float 280 descends from the floating position down to the rest position.

Optionally, in order to more effectively empty the detection chamber 200, the inner channel of the main duct 100 comprises an end portion 105, extending from the first end 110 to the aperture of the branch mouth 130, that has an inner volume at least equal to 50%, more optionally at least equal to 75%, of the inner volume of the detection chamber 200 extending from the bottom wall 235 to the aperture of the return duct 220. Alternatively, at least part of the end portion 105 may be replaced with a first intermediate duct, having adequate size, connecting the inlet 115 to the container.

Advantageously, in the embodiments of the detector device wherein the area of the section of the return channel is lower than the area of the section of the branch channel, formation of air bubbles is avoided while the detection chamber 200 is emptied.

Also, in the embodiments having an adequate area of the section of the branch channel, the detector device according to the invention operates correctly even with very viscous liquids.

The suction pumps, in particular pumps dosing liquid chemical products, in common applications are installed on the wall. As illustrated, the detector device is installed upstream of the external suction pump, whereby it is installed below the suction pump with the longitudinal axis z of the main duct 100 extending along a vertical orientation, and consequently it certainly assumes the operating configuration.

However, the detector device is capable to operate correctly even if it is installed so that the longitudinal axis z of the main duct 100 extends with an orientation inclined with respect to a straight line perpendicular to ground (i.e. a vertical straight line), provided that the float 280A can descend from the floating position down to the rest position due to gravity and that the liquid can return through the branch channel from the detection chamber 200 to the main duct 100 and possibly in the container to which the inlet 115 is connected. By way of example and not by way of limitation, the detector device could operate even when inclined by 45°.

A second embodiment of the detector device according to the invention is different from the one shown in Figures 1-5 only for the features of the float. As shown in Figure 6, even in such second embodiment of the detector device, the float 280B houses in an inner seat (at least) one permanent magnet 285 configured to magnetically interact with the reed switch 260 (namely, with the ferromagnetic reeds thereof) housed within the stem 250. In the float 280B, the permanent magnet 285 is in a position of the inner seat closer to the other end 282 of the float 280B (which other end 282 is facing the bottom wall 235) than the first end 281 of the float 280B (which first end 281 is facing the inner wall of the top cap 240), whereby the permanent magnet 285 is positioned in proximity of the other end 282 of the float 280B, and it is optionally stably maintained in such position by (at least) one cylindrical insert 286 housed within the inner seat of the float 280B as well.

In the detector device of Figure 6 the operating logic of the reed switch 260 is inverted. In fact, as shown in Figure 6a, when no liquid is present in the detection chamber 200, the float 280B is configured to fall onto rest position stop bolt 290 due to the force of gravity and thus to stably stay in the rest position even if the suction pump connected downstream of the outlet 125 is operated to suck. Consequently, the permanent magnet 285 is in the rest position at which it does not magnetically interact with (i.e. de-excites) the reed switch 260 (since the permanent magnet 285 is far away from the reed switch 260), that is thus open (i.e. it interrupts the contact between its own ferromagnetic reeds). Differently, as shown in Figure 6b, when the external suction pump succeeds in sucking liquid from the container, liquid flows through the main duct 100 and simultaneously (at least partially) fills the detection chamber 200 (through the branch channel formed by the branch mouth 130 and the branch duct 210), whereby the float 280B floats in the liquid 300 present in the detection chamber 200 and, consequently, slides from the rest position up to reaching and stably maintaining the floating position, at which the permanent magnet 285 magnetically interacts with (i.e. excites) the reed switch 260 and causes the same reed switch 260 to close; advantageously, in the floating position the float 280B comes into contact with the inner wall of the removable top cap 240.

It should be noted that even the first embodiment of the detector device shown in Figures 1-5 may be caused to operate with the same operating logic of the reed switch 260 shown in Figure 6. In fact, it is sufficient to mount the float 280A on the stem 250 with reverse orientation with respect to what shown in Figures 1-5, i.e. with the first end 281 of the float 280A facing the bottom wall 235 and with the other end 282 of the float 280A facing the inner wall of the top cap 240, thus obtaining an arrangement of the magnet 285 with respect to the reed switch 260 similar to what shown in Figure 6.

Alternatively, most of all in the case where the area of the section of the return channel and the area of the section of the branch channel are equal or substantially comparable to each other (e.g. they do not differ from each other by more than 25%), it is possible to mount the detector device shown in Figures 1-5 upside down, i.e. with the outlet 125 (operating as inlet) connected to the container and the inlet 115 (operating as outlet) connected to the suction pump to invert the operating logic of the reed switch 260 of the detector device.

The preferred embodiments of this invention have been described and a number of variations have been suggested hereinbefore, but it should be understood that those skilled in the art can make other variations and changes without so departing from the scope of protection thereof, as defined by the attached claims.

## Claims

1. Detector device configured to detect presence of liquid in a container, comprising a main duct (100) provided at a first end (110) with an inlet (115), configured to be connected to the container, and at a second end (120) with an outlet (125), configured to be connected to a suction device, wherein an inner channel of the main duct (100) is in communication with a detection chamber (200) through a branch channel (130, 210) and a return channel (140, 220) arranged along a lateral surface of the main duct (100) extending between the first and the second end (110; 120), wherein the branch channel (130, 210) is arranged between the first end (110) of the main duct (100) and the return channel (140, 220) and wherein the return channel (140, 220) is arranged between the second end (120) of the main duct (100) and the branch channel (130, 210), the detection chamber (200) being closed by a top cap (240) and by a bottom wall (235) and comprising a stem (250) that is coupled to at least one between the top cap (240) and the bottom wall (235) and that internally houses a reed switch (260), wherein the stem (250) is inserted into a longitudinal cavity (283) of a float (280A; 280B) housing at least one permanent magnet (285) in an inner seat, the float (280A; 280B) being configured to slide along the stem (250) between a rest position and a floating position, wherein:
- one between the rest position and the floating position coincides with a position of interaction of the float (280A; 280B) with the reed switch (260), at which said at least one permanent magnet (285) magnetically interacts with the reed switch (260), whereby the reed switch (260) is closed; and
- the other one between the rest position and the floating position coincides with a position of non-interaction of the float (280A; 280B) with the reed switch (260), at which said at least one permanent magnet (285) does not magnetically interact with the reed switch (260), whereby the reed switch (260) is open.

2. Detector device according to claim 1, wherein an area of a section of the return channel (140, 220) is less than an area of a section of the branch channel (130, 210), optionally, the area of said section of the return channel (140, 220) ranges from 20% to 60%, more optionally from 25% to 50%, still more optionally from 30% to 40%, even more optionally equal to about 35% of the area of said section of the branch channel (130, 210).

3. Detector device according to claim 1 or 2, wherein said inner channel of the main duct (100) comprises an end portion (105), extending from the first end (110) to the branch channel (130, 210), that has an inner volume at least equal to 50%, optionally at least equal to 75%, of an inner volume of the detection chamber (200) extending from the bottom wall (235) to the return channel (140, 220).

4. Detector device according to any one of the preceding claims, wherein the rest position coincides with the position of interaction of the float (280A) with the reed switch (260) and the floating position coincides with the position of non-interaction of the float (280A) with the reed switch (260).

5. Detector device according to any one of the preceding claims, wherein the stem (250) is coupled only to the top cap (240), whereby the stem (250) protrudes from the top cap (240), wherein wires (265) connected to terminals (267) of two magnetically actuated ferromagnetic reeds of the reed switch (260) are housed within a cable (270) exiting from the cap (240).

6. Detector device according to claim 5, wherein a free end of the stem (250), that is facing the bottom wall (235), is provided with a rest position stop bolt (290) configured to prevent the float (280A) from sliding beyond said free end.

7. Detector device according to any one of the preceding claims, wherein the top cap (240) is removably coupled to the detection chamber (200) and the bottom wall (235) is integrally coupled to the detection chamber (200).

8. Detector device according to claim 7, wherein the top cap (240) is provided with a threaded rim (245) screwed internally to an end (230) of the detection chamber (200), a first OR-ring seal ensuring sealing between the detection chamber (200) and the top cap (240).

9. Detector device according to any one of the preceding claims, wherein the main duct (100) is provided with a branch mouth (130) and a return mouth (140) respectively coupled to a branch duct (210) and a return duct (220) with which the detection chamber (200) is provided, wherein the branch channel is formed by the branch mouth (130) and the branch duct (210), and wherein the return channel is formed by the return mouth (140) and the return duct (220).

10. Detector device according to claim 9, wherein the branch duct (210) is inserted into the branch mouth (130) with a sealing coupling, optionally a plug-in coupling, and wherein the return duct (220) is inserted into the return mouth (140) with a sealing coupling, optionally a plug-in coupling.

11. Detector device according to any one of the preceding claims, wherein the inlet (115) is provided with a threaded rim (116) screwed internally to the first end (110) of the main duct (100), a second O-ring seal (118) ensuring sealing between the main duct (100) and the inlet (115), whereby the inlet (115) is removably coupled to the first end (110) of the main duct (100), and wherein the outlet (125) is provided with a threaded rim (126) screwed internally to the second end (120) of the main duct (100), a third O-ring seal (128) ensuring sealing between the main duct (100) and the outlet (125), whereby the outlet (125) is removably coupled to the second end (120) of the main duct (100), wherein the inlet (115) is provided with an inlet duct (117) through which it is configured to be connected to the container, and wherein the outlet (125) is provided with an outlet duct (127) through which it is configured to be connected to the suction device.

12. Detector device according to anyone of the preceding claims, wherein the stem (250) has a cylindrical or prism shape.

13. Detector device according to any one of the preceding claims, wherein the longitudinal cavity (283) of the float (280A; 280B) has a shape corresponding to the one of the stem (250).

## Patentansprüche

1. Detektorvorrichtung, die so konfiguriert ist, dass sie das Vorhandensein von Flüssigkeit in einem Behälter detektiert, mit einem Hauptkanal (100), der an einem ersten Ende (110) mit einem Einlass (115) versehen ist, der so konfiguriert ist, dass er mit dem Behälter verbunden werden kann, und an einem zweiten Ende (120) mit einem Auslass (125) versehen ist, der so konfiguriert ist, dass er mit einer Ansaugvorrichtung verbunden werden kann, wobei ein innerer Kanal des Hauptkanals (100) über einen Verzweigungskanal (130, 210) und einen Rücklaufkanal (140, 220), die entlang einer seitlichen Oberfläche des Hauptkanals (100) angeordnet sind und sich zwischen dem ersten und dem zweiten Ende (110, 120) erstrecken, mit einer Detektionskammer (200) in Verbindung steht, wobei der Verzweigungskanal (130, 210) zwischen dem ersten Ende (110) des Hauptkanals (100) und dem Rückführkanal (140, 220) angeordnet ist und wobei der Rückführkanal (140, 220) zwischen dem zweiten Ende (120) des Hauptkanals (100) und dem Verzweigungskanal (130, 210) angeordnet ist, die Detektionskammer (200) durch eine obere Kappe (240) und durch eine untere Wand (235) verschlossen ist und einen Stamm (250) aufweist, der mit mindestens einem aus der oberen Kappe (240) und der unteren Wand (235) gekoppelt ist und der im Inneren einen Reed-Schalter (260) aufnimmt, wobei der Stamm (250) in einen Längshohlraum (283) eines Schwimmers (280A; 280B) eingesetzt ist, der mindestens einen Permanentmagneten (285) in einem inneren Sitz aufnimmt, wobei der Schwimmer (280A; 280B) so konfiguriert ist, dass er entlang des Schafts (250) zwischen einer Ruheposition und einer Schwimmstellung gleitet, wobei:
- eine zwischen der Ruheposition und der Schwimmstellung liegende Position mit einer Position der Wechselwirkung des Schwimmers (280A; 280B) mit dem Reed-Schalter (260) zusammenfällt, bei der der mindestens eine Permanentmagnet (285) magnetisch mit dem Reed-Schalter (260) zusammenwirkt, wodurch der Reed-Schalter (260) geschlossen wird; und
- die andere zwischen der Ruheposition und der Schwimmstellung mit einer Position der Nicht-Wechselwirkung des Schwimmers (280A; 280B) mit dem Reed-Schalter (260) übereinstimmt, bei der der mindestens eine Permanentmagnet (285) nicht magnetisch mit dem Reed-Schalter (260) wechselwirkt, wodurch der Reed-Schalter (260) offen ist.

2. Detektorvorrichtung nach Anspruch 1, wobei eine Fläche eines Abschnitts des Rücklaufkanals (140, 220) kleiner ist als eine Fläche eines Abschnitts des Abzweigkanals (130, 210), wobei optional die Fläche des Abschnitts des Rücklaufkanals (140, 220) im Bereich von 20 % bis 60 %, optionaler im Bereich von 25 % bis 50 %, noch optionaler im Bereich von 30 % bis 40 %, noch optionaler gleich etwa 35 % der Fläche des Abschnitts des Abzweigkanals (130, 210) liegt.

3. Detektorvorrichtung nach Anspruch 1 oder 2, wobei der Innenkanal des Hauptkanals (100) einen Endabschnitt (105) umfasst, der sich vom ersten Ende (110) zum Abzweigkanal (130, 210) erstreckt, der ein Innenvolumen von mindestens 50 %, optional von mindestens 75 %, eines Innenvolumens der Detektionskammer (200) aufweist, die sich von der Bodenwand (235) zum Rücklaufkanal (140, 220) erstreckt.

4. Detektorvorrichtung nach einem der vorhergehenden Ansprüche, wobei die Ruheposition mit der Position der Wechselwirkung des Schwimmers (280A) mit dem Reed-Schalter (260) zusammenfällt und die Schwimmstellung mit der Position der Nicht-Wechselwirkung des Schwimmers (280A) mit dem Reed-Schalter (260) zusammenfällt.

5. Detektorvorrichtung nach einem der vorhergehenden Ansprüche, wobei der Stamm (250) nur mit der oberen Kappe (240) gekoppelt ist, wobei der Stamm (250) aus der oberen Kappe (240) herausragt, wobei Drähte (265), die mit Anschlüssen (267) von zwei magnetisch betätigten ferromagnetischen Zungen des Zungenschalters (260) verbunden sind, in einem Kabel (270) untergebracht sind, das aus der Kappe (240) austritt.

6. Detektorvorrichtung nach Anspruch 5, wobei ein freies Ende des Stammes (250), das der Bodenwand (235) zugewandt ist, mit einem Ruhepositions-Anschlagbolzen (290) versehen ist, der so konfiguriert ist, dass er verhindert, dass der Schwimmer (280A) über das freie Ende hinaus gleitet.

7. Detektorvorrichtung nach einem der vorhergehenden Ansprüche, wobei die obere Kappe (240) abnehmbar mit der Detektionskammer (200) gekoppelt ist und die untere Wand (235) einstückig mit der Detektionskammer (200) gekoppelt ist.

8. Detektorvorrichtung nach Anspruch 7, wobei die obere Kappe (240) mit einem Gewinderand (245) versehen ist, das innen mit einem Ende (230) der Detektionskammer (200) verschraubt ist, wobei eine erste O-Ringdichtung die Abdichtung zwischen der Detektionskammer (200) und der oberen Kappe (240) sicherstellt.

9. Detektorvorrichtung nach einem der vorhergehenden Ansprüche, wobei der Hauptkanal (100) mit einer Abzweigmündung (130) und einer Rückführmündung (140) versehen ist, die jeweils mit einem Abzweigkanal (210) und einem Rückführkanal (220) gekoppelt sind, mit denen die Detektionskammer (200) versehen ist, wobei der Abzweigkanal durch die Abzweigmündung (130) und den Abzweigkanal (210) gebildet ist, und wobei der Rückführkanal durch die Rückführmündung (140) und den Rückführkanal (220) gebildet ist.

10. Detektoreinrichtung nach Anspruch 9, wobei der Abzweigkanal (210) mit einer Verschlusskupplung, ggf. einer Steckkupplung, in die Abzweigmündung (130) eingesetzt ist, und wobei der Rücklaufkanal (220) mit einer Verschlusskupplung, ggf. einer Steckkupplung, in die Rücklaufmündung (140) eingesetzt ist.

11. Detektorvorrichtung nach einem der vorhergehenden Ansprüche, wobei der Einlass (115) mit einem Gewinderand (116) versehen ist, das innen mit dem ersten Ende (110) des Hauptkanals (100) verschraubt ist, wobei eine zweite O-Ring-Dichtung (118) die Abdichtung zwischen dem Hauptkanal (100) und dem Einlass (115) sicherstellt, wobei der Einlass (115) abnehmbar mit dem ersten Ende (110) des Hauptkanals (100) gekoppelt ist, und wobei der Auslass (125) mit einem Gewinderand (126) versehen ist, das innen mit dem zweiten Ende (120) des Hauptkanals (100) verschraubt ist, eine dritte O-Ring-Dichtung (128), die eine Abdichtung zwischen dem Hauptkanal (100) und dem Auslass (125) sicherstellt, wobei der Auslass (125) abnehmbar mit dem zweiten Ende (120) des Hauptkanals (100) gekoppelt ist, wobei der Einlass (115) mit einem Einlasskanal (117) versehen ist, durch den er so konfiguriert ist, dass er mit dem Behälter verbunden werden kann, und wobei der Auslass (125) mit einem Auslasskanal (127) versehen ist, durch den er so konfiguriert ist, dass er mit der Saugvorrichtung verbunden werden kann.

12. Detektorvorrichtung nach einem der vorhergehenden Ansprüche, wobei der Stamm (250) eine zylindrische oder prismatische Form aufweist.

13. Detektorvorrichtung nach einem der vorhergehenden Ansprüche, wobei der Längshohlraum (283) des Schwimmers (280A; 280B) eine Form aufweist, die der des Stammes (250) entspricht.

## Revendications

1. Dispositif de détection conçu pour détecter la présence de liquide dans un récipient, comprenant un conduit principal (100) prévu à une première extrémité (110) avec une entrée (115), conçue pour être connectée au récipient, et à une seconde extrémité (120) avec une sortie (125), conçue pour être connectée à un dispositif d'aspiration, où un canal intérieur du conduit principal (100) est en communication avec une chambre de détection (200) à travers un canal de dérivation (130, 210) et un canal de retour (140, 220) positionné le long d'une surface latérale du conduit principal (100) s'étendant entre la première et la seconde extrémité (110 ; 120), où le canal de dérivation (130, 210) est disposé entre la première extrémité (110) du conduit principal (100) et le canal de retour (140, 220) et où le canal de retour (140, 220) est positionné entre la seconde extrémité (120) du conduit principal (100) et le canal de dérivation (130, 210), la chambre de détection (200) étant fermée par un capuchon supérieur (240) et par une paroi inférieure (235) et comprenant une tige (250) couplée à au moins l'un des capuchon supérieur (240) et paroi inférieure (235) et qui loge intérieurement un interrupteur à lames (260), où la tige (250) est insérée dans une cavité longitudinale (283) d'un flotteur (280A ; 280B) logeant au moins un aimant permanent (285) dans un siège intérieur, le flotteur (280A ; 280B) étant conçu pour coulisser le long de la tige (250) entre une position de repos et une position flottante, où :
- l'une des position de repos et position flottante coïncide avec une position d'interaction du flotteur (280A ; 280B) avec l'interrupteur à lames (260), au niveau de laquelle ledit au moins un aimant permanent (285) interagit magnétiquement avec l'interrupteur à lames (260), de sorte que l'interrupteur à lames (260) est fermé ; et
- l'autre des position de repos et position flottante coïncide avec une position de non-interaction du flotteur (280A; 280B) avec l'interrupteur à lames (260), au niveau de laquelle ledit au moins un aimant permanent (285) n'interagit pas magnétiquement avec l'interrupteur à lames (260), de sorte que l'interrupteur à lames (260) est ouvert.

2. Dispositif de détection selon la revendication 1, où une aire d'une section du canal de retour (140, 220) est inférieure à une aire d'une section du canal de dérivation (130, 210), optionnellement, l'aire de ladite section du canal de retour (140, 220) est comprise entre 20% et 60%, plus optionnellement entre 25% et 50%, encore plus optionnellement entre 30% et 40%, encore plus optionnellement égale à environ 35% de l'aire de ladite section du canal de dérivation (130,210).

3. Dispositif de détection selon la revendication 1 ou 2, où ledit canal interne du conduit principal (100) comprend une partie d'extrémité (105), s'étendant depuis la première extrémité (110) jusqu'au canal de dérivation (130, 210), qui présente un volume intérieur au moins égal à 50%, optionnellement au moins égal à 75%, d'un volume intérieur de la chambre de détection (200) s'étendant de la paroi inférieure (235) au canal de retour (140, 220).

4. Dispositif de détection selon l'une quelconque des revendications précédentes, où la position de repos coïncide avec la position d'interaction du flotteur (280A) avec l'interrupteur à lames (260) et la position flottante coïncide avec la position de non-interaction du flotteur (280A) avec l'interrupteur à lames (260).

5. Dispositif de détection selon l'une quelconque des revendications précédentes, où la tige (250) est couplée uniquement au capuchon supérieur (240), de sorte que la tige (250) fait saillie du capuchon supérieur (240), où des fils (265) reliées aux bornes (267) de deux lames ferromagnétiques actionnées magnétiquement du l'interrupteur à lames (260) sont logés dans un câble (270) sortant du capuchon (240).

6. Dispositif de détection selon la revendication 5, où une extrémité libre de la tige (250), qui fait face à la paroi inférieure (235), est munie d'un boulon d'arrêt en position de repos (290) conçu pour empêcher le flotteur (280A) de glisser au-delà de ladite extrémité libre.

7. Dispositif de détection selon l'une quelconque des revendications précédentes, où le capuchon supérieur (240) est couplé de manière amovible à la chambre de détection (200) et la paroi inférieure (235) est intégralement couplée à la chambre de détection (200).

8. Dispositif de détection selon la revendication 7, où le capuchon supérieur (240) est pourvu d'un bord fileté (245) vissé intérieurement à une extrémité (230) de la chambre de détection (200), un premier joint torique assurant l'étanchéité entre la chambre de détection (200) et le capuchon supérieur (240).

9. Dispositif de détection selon l'une quelconque des revendications précédentes, où le conduit principal (100) est pourvu d'une bouche de dérivation (130) et d'une bouche de retour (140) couplées respectivement à un conduit de dérivation (210) et à un conduit de retour (220) dont est pourvue la chambre de détection (200), où le canal de dérivation est formé par la bouche de dérivation (130) et le conduit de dérivation (210), et où le canal de retour est formé par la bouche de retour (140) et le conduit de retour (220).

10. Dispositif de détection selon la revendication 9, où le conduit de dérivation (210) est inséré dans la bouche de dérivation (130) avec un raccord étanche, optionnellement un raccord enfichable, et où le conduit de retour (220) est inséré dans la bouche de retour (140) avec un raccord étanche, optionnellement un raccord enfichable.

11. Dispositif de détection selon l'une quelconque des revendications précédentes, où l'entrée (115) est pourvue d'un bord fileté (116) vissé intérieurement à la première extrémité (110) du conduit principal (100), un deuxième joint torique (118) assurant l'étanchéité entre le conduit principal (100) et l'entrée (115), de sorte que l'entrée (115) est couplée de manière amovible à la première extrémité (110) du conduit principal (100), et où la sortie (125) est pourvue d'un bord fileté (126) vissé intérieurement à la seconde extrémité (120) du conduit principal (100), un troisième joint torique (128) assurant l'étanchéité entre le conduit principal (100) et la sortie (125), de sorte que la sortie (125) est couplée de manière amovible à la seconde extrémité (120) du conduit principal (100), où l'entrée (115) est pourvue d'un conduit d'entrée (117) à travers lequel elle est conçue pour être connectée au récipient, et où la sortie (125) est pourvue d'un conduit de sortie (127) à travers lequel elle est conçue pour être connectée au dispositif d'aspiration.

12. Dispositif de détection selon l'une quelconque des revendications précédentes, où la tige (250) présente une forme cylindrique ou prismatique.

13. Dispositif de détection selon l'une quelconque des revendications précédentes, où la cavité longitudinale (283) du flotteur (280A ; 280B) présente une forme correspondant à celle de la tige (250).
